# EUROPEAN PATENT SPECIFICATION

(11) **EP 0 767 222 B1**
(45) Date of publication and mention of the grant of the patent: **10.01.2001**
(21) Application number: 96306583.4
(22) Date of filing: 11.09.1996
(51) Int. Cl.: C09C 1/36, C01G 23/08, G01J 3/44

(54) **Calcination of titanium dioxide**
Kalzinierung von Titandioxid
Calcination de dioxyde de titane

(30) Priority: 05.10.1995 GB 9520313
(43) Date of publication of application: 09.04.1997
(73) Proprietor: TIOXIDE GROUP SERVICES LIMITED, London W14 0QL (GB)
(72) Inventor: Besson, Jean Pierre, 62100 Calais (FR); King, Peter William Bert, Widnes, Cheshire WA8 7NN (GB); Wilkins, Terence Arthur, Northwich, Cheshire CW9 8PU (GB); McIvor, Malcolm Charles, Mollington, Chester CH1 6LD (GB); Everall, Neil John, Belmont, Durham DH1 2AB (GB)
(74) Representative: Winkler, Andreas, Dr.

(56) References cited:
- WO-A-87/06011
- GB-A- 549 120

## Description

The invention relates to a method of calcining titanium dioxide and in particular to a method of controlling calcination conditions by monitoring the change from the anatase to the rutile crystal modification during calcination.

Titanium dioxide pigments are produced in either the anatase or rutile crystal modification but generally the preferred modification is rutile. In the process for producing titanium dioxide which is known as the "sulphate" process titanium dioxide is produced in the anatase form. It is usually converted to the rutile crystal modification by calcining in a rotary kiln.

It is important to control the calcination conditions partly to optimise energy use in what is an energy intensive process but also to control the quality of the product. In general under-calcination can give poor pigments due to incomplete conversion to rutile and over-calcination can lead to a hard product which is difficult to use.

A well known method of monitoring the conversion of anatase to rutile within the kiln is by X-ray diffraction. However, this technique relies on batchwise sampling and the results are not available for some time after the sample is taken. Consequently, a calciner may be operating under less than optimal conditions before a correction is made based on the results of the X-ray diffraction analysis.

It is an object of this invention to provide a method of controlling a calcination kiln in which the conversion of anatase to rutile is monitored frequently and rapidly, thus allowing a quicker adjustment of conditions to be made when necessary.

According to the invention, a method of calcining titanium dioxide comprises monitoring conversion of anatase titanium dioxide to rutile titanium dioxide by Raman spectroscopy utilising an optical probe positioned in close proximity to a calcination kiln or coupled to equipment associated with a calcination kiln.

The method relies upon the fact that the anatase and rutile forms of titanium dioxide possess different Raman spectra and, in particular, the Raman spectrum of anatase contains an intense narrow line at approximately 142 cm⁻¹ Raman shift. The Raman spectrum of rutile also contains a line at approximately 142 cm⁻¹ Raman shift but this is weak and consequently does not interfere significantly with estimation of anatase concentration using the line at 142 cm⁻¹. The intensity of this line, measured relative to one of the lines in the Raman spectrum of rutile, preferably one of the lines at approximately 445 or 610 cm⁻¹ Raman shift, can be used to estimate the relative levels of anatase and rutile in a sample of titanium dioxide and hence the degree of conversion of anatase to rutile.

Raman spectroscopy relies upon detecting wavelength displacements between radiation scattered by molecules and crystals and incident radiation. The incident radiation used is monochromatic and preferably coherent. In the method of the current invention it is preferred to use radiation having a wavelength in the range 200 nm to 1100 nm and preferably in the range 400 nm to 900 nm. The use of wavelengths in this range simplifies the selection of optical components such as lenses. Preferably, a laser is used to generate the incident radiation.

The optical probe used in the method of the invention is positioned in close proximity to the calcination kiln and consequently operates in a high temperature environment. The optical probe must be insulated from the high temperature. Preferably, however, the Raman spectrometer is protected from the high temperatures by positioning it some distance from the optical probe and transmitting the incident and scattered radiation along optical fibres. Suitably, these fibres are constructed from silica or other material having a low Raman scattering cross-section and low optical absorption over the range of wavelengths in use.

The Raman spectrometer comprises a device to analyse the frequency and intensity of the scattered light and a device to block the scattered laser radiation known as Rayleigh scatter which would otherwise swamp the Raman spectrum. The device for blocking Rayleigh scatter can be either dispersive, for example a grating or prism coupled to a spatial filter, or can be an optical filter which transmits Raman wavelengths but blocks unshifted laser scatter. Preferably, the optical filter is a holographic filter. The frequency analyser can be an interferometer but is preferably based on dispersive optics in which a dispersive element such as a grating or prism is coupled to a detector which is preferably a multichannel detector such as a charge coupled detector (CCD). Preferably, a multiplexed grating is used to disperse the spectrum at high resolution onto the CCD. Such an instrument has no moving parts and inherently good calibration stability. A particularly suitable instrument is the Kaiser Holoprobe 532 supplied by Kaiser Optical Systems Inc.

An alternative analyser consists of an optical interferometer in which the optical pathlength of one arm can be modulated, coupled to a single detective element, the output of which is subjected to Fourier transformation to yield the Raman spectrum. However, the dispersive instrument is preferred because it contains no moving parts and generally has a superior signal-to-noise ratio. In addition it is difficult to use the Fourier transform instrument on hot materials as conventional, commercial instruments operate at infrared wavelengths where sample incandescence causes interference.

The optical probe preferably contains a device to block the Raman spectrum generated in the laser delivery fibre as well as a device to attenuate the Rayleigh scatter from the sample. These devices are preferably holographic filters.

An important advantage of the method of the invention is the rapid feedback available to control the calcination process. This advantage would be maximised by monitoring the conversion to rutile within the calcination kiln. However, extreme problems are associated with locating the optical probe within a rotating kiln which is operating at a temperature in the range 800°C to 1000°C. Therefore, in the method of the invention the optical probe is positioned in close proximity to the calcination kiln or coupled to equipment associated with the kiln. A particularly suitable location for the optical probe is proximate to a discharge apparatus and, particularly, proximate to the primary cooler attached to a calcination kiln. The Raman lines obtained at the relatively lower temperature existing in the primary cooler are narrower and better defined and the background signal due to sample incandescence is lower leading to a lower signal-to-noise ratio. However, since the method of the invention relies upon a comparison of the signal due to anatase titanium dioxide with the signal due to rutile titanium dioxide the relatively poorer signal obtained at higher temperatures does not preclude operating at higher temperatures.

In a particularly preferred embodiment the optical probe is coupled to a sampling device attached to the primary cooler of a calcination kiln. Any suitable sampling device is used, the principal requirement being that the sample is regularly refreshed so as to be representative of the material being discharged from the furnace.

Preferably, the optical probe is not placed in direct contact with the titanium dioxide powder. Usually, a lens arrangement is used to focus the exciting radiation onto the titanium dioxide sample and collect the Raman scatter from it, typically through a window formed from silica or other material which readily transmits the radiation. Preferably, a backscattering arrangement is used which allows one lens assembly. The working distance of the lens assembly is preferably variable and the optical probe is typically positioned at a distance between 10 cm and 5 m from the titanium dioxide sample.

In the process of manufacturing titanium dioxide pigments using the "sulphate" process a moist cake of hydrous titanium oxide is fed to a rotary, inclined kiln which, typically, is directly heated by passing gases generated by combustion of a hydrocarbon fuel such as natural gas in contraflow to the titanium dioxide. The initial process which takes place is the evaporation of water from the hydrous titanium oxide and titanium dioxide in the anatase crystal modification is formed. Crystal growth occurs and, in the last part of the furnace, the anatase titanium dioxide is converted to rutile titanium dioxide which is discharged from the furnace generally at a temperature in the range 900°C to 1000°C. The control of the calcination process is critical to obtaining rutile pigments having an optimum particle size and one primary parameter for monitoring calcination conditions is the degree of conversion to rutile. In the method of the invention this degree of conversion is monitored using Raman spectroscopy.

The spectral data from the Raman spectrometer is usually analysed by measuring the intensity, either by peak height or by integration of the peak area, of an anatase line, preferably the line at 142 cm⁻¹ Raman shift. The ratio of this intensity to the intensity of a major rutile line, preferably one of the lines at 445 cm⁻¹ or 610 cm⁻¹, measured by peak height or by integration over the peak area, is calculated. A calibration graph is constructed using samples of known anatase/rutile ratio from which the anatase/rutile ratio of an unknown sample can be determined using the observed ratio of Raman line intensities. Preferably the calculations are programmed into computer software so that the anatase/rutile composition is computed automatically from the Raman spectrum without manual intervention.

Alternatively, the Raman spectra are analysed by multivariate statistical modelling such as partial least squares, classic least squares, principal component regression or neural network modelling. The methods may also be configured to analyse spectra automatically without manual intervention. Generally, however, the multivariate methods are more complicated and the simple band intensity ratio method produces adequate precision for use in the method of the invention.

The measured line intensities are corrected for the effects of varying sample temperature by assuming Boltzmann statistics and from the known behaviour of Raman scattering cross-section as a function of vibrational quantum number. Usually, this correction is important in order to obtain an accurate measure of the anatase/rutile ratio.

The method of the invention enables an operator to be provided with a rapid measurement of the degree of conversion. The calcination conditions can be suitably adjusted to maintain the degree of conversion within predetermined limits. Generally the conditions will be adjusted by controlling the air flow to the calciner and fuel flow to the burners since this generally provides a means of rapidly adjusting the temperature profile within the kiln. However, adjustments to other parameters such as the rate of feed of hydrous titanium oxide can also be made in order to optimise operating conditions.

## Claims

1. A method of calcining titanium dioxide comprising monitoring conversion of anatase titanium dioxide to rutile titanium dioxide characterised in that said conversion is monitored by Raman spectroscopy utilising an optical probe positioned in close proximity to a calcination kiln or coupled to equipment associated with a calcination kiln.

2. A method according to claim 1 characterised in that the conversion of anatase titanium dioxide to rutile titanium dioxide is monitored by measuring the intensity of the anatase Raman spectrum line at 142 cm⁻¹ Raman shift.

3. A method according to claim 2 characterised in that the conversion of anatase titanium dioxide to rutile titanium dioxide is monitored by measuring the intensity of the anatase Raman spectrum line at 142 cm⁻¹ Raman shift relative to the intensity of one of the rutile Raman spectrum lines at 445 cm⁻¹ or 610 cm⁻¹ Raman shift.

4. A method according to any one of the preceding claims characterised in that incident radiation used to produce the Raman spectrum has a wavelength in the range 200 nm to 1100 nm.

5. A method according to any one of the preceding claims characterised in that a laser is used to generate incident radiation for the Raman spectrum.

6. A method according to any one of the preceding claims characterised in that incident and scattered radiation is transmitted along optical fibres between the optical probe and a Raman spectrometer.

7. A method according to any one of the preceding claims characterised in that Rayleigh scatter is blocked by an optical filter which is a holographic filter.

8. A method according to any one of the preceding claims characterised in that a Raman spectrometer containing a frequency analyser based on dispersive optics in which a multiplexed grating is coupled to a charge coupled detector is used to produce a Raman spectrum.

9. A method according to any one of the preceding claims characterised in that the optical probe contains a first device designed to block a Raman spectrum generated by a laser delivery fibre and a second device designed to attenuate Rayleigh scatter from a titanium dioxide sample, said first device and said second device being holographic filters.

10. A method according to any one of the precediing claims characterised in that the optical probe is positioned proximate to a primary cooler attached to the calcination kiln.

11. A method according to any one of the preceding claims characterised in that a lens arrangement is used to focus exciting radiation onto a titanium dioxide sample and to collect Raman scatter from the sample.

12. A method according to any one of the preceding claims characterised in that the optical probe is positioned at a distance in the range 10 cm to 5m from a titanium dioxide sample.

13. A method according to claim 3 characterised in that the intensity of the anatase Raman spectrum line at 142 cm⁻¹ Raman shift and the intensity of the rutile Raman spectrum line at 445 cm⁻¹ or 610 cm⁻¹ Raman shift are measured by peak height or by integration of peak area.

14. A method according to any one of the preceding claims characterised in that measured line intensities are corrected for the effects of varying sample temperature by assuming Boltzmann statistics and from the known behaviour of Raman scattering cross-section as a function of vibrational quantum number.

## Patentansprüche

1. Verfahren zum Kalzinieren von Titandioxid, umfassend das Überwachen der Überführung von Anatas-Titandioxid in Rutil-Titandioxid, dadurch gekennzeichnet, daß die Überführung mit Hilfe von Raman-Spektroskopie überwacht wird, wobei eine in unmittelbarer Nähe eines Kalzinierofens angeordnete optische Sonde oder eine optische Sonde, die an ein mit einem Kalzinierofen verbundenen Gerät gekoppelt ist, verwendet wird.

2. Verfahren nach Anspruch 1, dadurch gekennzeichnet, daß die Überführung von Anatas-Titandioxid in Rutil-Titandioxid durch Messen der Intensität der Anatas-Raman-Spektrallinie bei einer Raman-Verschiebung von 142 cm⁻¹ überwacht wird.

3. Verfahren nach Anspruch 2, dadurch gekennzeichnet, daß die Überführung des Anatas-Titandioxids in Rutil-Titandioxid durch Messen der Intensität der Anatas-Raman-Spektrallinie bei einer Raman-Verschiebung von 142 cm⁻¹ relativ zur Intensität einer der Rutil-Raman-Spektrallinien bei einer Raman-Verschiebung von 445 cm⁻¹ oder 610 cm⁻¹ überwacht wird.

4. Verfahren nach einem der vorhergehenden Ansprüche, dadurch gekennzeichnet, daß die zum Erzeugen des Raman-Spektrums verwendete einfallende Strahlung eine Wellenlänge im Bereich von 200 nm bis 1100 nm aufweist.

5. Verfahren nach einem der vorhergehenden Ansprüche, dadurch gekennzeichnet, daß ein Laser verwendet wird, um eine einfallende Strahlung für das Raman-Spektrum zu erzeugen.

6. Verfahren nach einem der vorhergehenden Ansprüche, dadurch gekennzeichnet, daß einfallende und gestreute Strahlung über optische Fasern zwischen der optischen Sonde und einem Raman-Spektrometer übertragen wird.

7. Verfahren nach einem der vorhergehenden Ansprüche, dadurch gekennzeichnet, daß Rayleigh-Streuung durch einen optischen Filter blockiert wird, welcher ein holographischer Filter ist.

8. Verfahren nach einem der vorhergehenden Ansprüche, dadurch gekennzeichnet, daß ein Raman-Spektrometer verwendet wird, der einen Frequenzanalysator auf der Basis von dispersiver Optik enthält, wobei ein Multiplexgitter mit einem ladungsgekoppelten Detektor gekoppelt ist, um ein Raman-Spektrum zu erzeugen.

9. Verfahren nach einem der vorhergehenden Ansprüche, dadurch gekennzeichnet, daß die optische Sonde eine erste Vorrichtung enthält, die dafür vorgesehen ist, ein durch eine Laserübertragungsfaser erzeugtes Raman-Spektrum zu blockieren, und eine zweite Vorrichtung enthält, die dafür vorgesehen ist, Rayleigh-Streuung aus einer Titandioxidprobe abzuschwächen, wobei die erste Vorrichtung und die zweite Vorrichtung holographische Filter sind.

10. Verfahren nach einem der vorhergehenden Ansprüche, dadurch gekennzeichnet, daß die optische Sonde in der Nähe eines Primärkühlers angeordnet ist, welcher mit dem Kalzinierofen verbunden ist.

11. Verfahren nach einem der vorhergehenden Ansprüche, dadurch gekennzeichnet, daß eine Linsenanordnung verwendet wird, um anregende Strahlung auf eine Titandioxidprobe zu fokussieren und Raman-Streuung aus der Probe zu sammeln.

12. Verfahren nach einem der vorhergehenden Ansprüche, dadurch gekennzeichnet, daß die optische Sonde in einem Abstand im Bereich von 10 cm bis 5 m von einer Titandioxidprobe angeordnet ist.

13. Verfahren nach Anspruch 3, dadurch gekennzeichnet, daß die Intensität der Anatas-Raman-Spektrallinie bei einer Raman-Verschiebung von 142 cm⁻¹ und die Intensität der Rutil-Raman-Spektrallinie bei einem Shift von 445 cm⁻¹ oder 610 cm⁻¹ nach Peakhöhe oder über Integration der Peakfläche gemessen werden.

14. Verfahren nach einem der vorhergehenden Ansprüche, dadurch gekennzeichnet, daß die gemessenen Linienintensitäten entsprechend den Wirkungen variierender Probentemperatur unter Annahme von Boltzmann-Statistik und aus dem bekannten Verhalten eines Raman-Streuquerschnitts als Funktion der Vibrationsquantenzahl korrigiert werden.

## Revendications

1. Procédé pour calciner du dioxyde de titane comprenant la surveillance de la conversion du dioxyde de titane anastase en dioxyde de titane rutile, caractérisé en ce que ladite conversion est surveillée par spectroscopie Raman en utilisant une sonde optique placée à proximité immédiate d'un four de calcination ou couplée à un dispositif associé à un four de calcination.

2. Procédé selon la revendication 1, caractérisé en ce que la conversion du dioxyde de titane anastase en dioxyde de titane rutile est surveillée par mesure de l'intensité de la raie du spectre Raman de l'anastase pour un déplacement Raman égal à 142 cm⁻¹.

3. Procédé selon la revendication 2, caractérisé en ce que la conversion du dioxyde de titane anastase en dioxyde de titane rutile est surveillée par mesure de l'intensité de la raie du spectre Raman de l'anastase pour un déplacement Raman égal à 142 cm⁻¹ par rapport à l'intensité d'une des raies du spectre Raman du rutile pour un déplacement Raman égal à 445 cm⁻¹ ou à 610 cm⁻¹.

4. Procédé selon l'une quelconque des revendications précédentes, caractérisé en ce que le rayonnement incident utilisé pour produire le spectre Raman possède une longueur d'onde dans la gamme comprise entre 200 nm et 1100 nm.

5. Procédé selon l'une quelconque des revendications précédentes, caractérisé en ce qu'on utilise un laser pour générer le rayonnement incident pour le spectre Raman.

6. Procédé selon l'une quelconque des revendications précédentes, caractérisé en ce que les rayonnements incident et diffusé sont transmis par des fibres optiques entre la sonde optique et un spectromètre Raman.

7. Procédé selon l'une quelconque des revendications précédentes, caractérisé en ce que la diffusion de Rayleigh est bloquée par un filtre optique, qui est un filtre holographique.

8. Procédé selon l'une quelconque des revendications précédentes, caractérisé en ce qu'on utilise un spectromètre Raman contenant un analyseur de fréquences à base d'instruments d'optique dispersifs, dans lesquels un réseau multiplexé est couplé à un détecteur à transfert de charge afin de produire un spectre Raman.

9. Procédé selon l'une quelconque des revendications précédentes, caractérisé en ce que la sonde optique contient un premier dispositif destiné à bloquer un spectre Raman engendré par une fibre de transmission laser et un second dispositif destiné à atténuer la diffusion de Rayleigh provenant d'un échantillon de dioxyde de titane, ledit premier dispositif et ledit second dispositif étant des filtres holographiques.

10. Procédé selon l'une quelconque des revendications précédentes, caractérisé en ce que la sonde optique est placée à proximité d'un appareil de refroidissement primaire relié au four de calcination.

11. Procédé selon l'une quelconque des revendications précédentes, caractérisé en ce qu'on utilise un agencement de lentilles pour focaliser le rayonnement d'excitation sur un échantillon de dioxyde de titane et pour recueillir la diffusion Raman provenant de l'échantillon.

12. Procédé selon l'une quelconque des revendications précédentes, caractérisé en ce que la sonde optique est placée à une distance dans la gamme comprise entre 10 cm et 5 m d'un échantillon de dioxyde de titane.

13. Procédé selon la revendication 3, caractérisé en ce qu'on mesure l'intensité de la raie du spectre Raman de l'anastase pour un déplacement Raman égal à 142 cm⁻¹ et l'intensité de la raie du spectre Raman du rutile pour un déplacement Raman égal à 445 cm⁻¹ ou à 610 cm⁻¹, par la hauteur du pic ou par intégration de la surface du pic.

14. Procédé selon l'une quelconque des revendications précédentes, caractérisé en ce que les intensités mesurées des raies sont corrigées en ce qui concerne les effets de la variation de la température de l'échantillon en appliquant les statistiques de Boltzmann et à partir du comportement connu de la section efficace de diffusion Raman comme fonction du nombre quantique des oscillations.
